# EUROPEAN PATENT SPECIFICATION

(11) **EP 3 526 903 B1**
(45) Date of publication and mention of the grant of the patent: **19.07.2023**
(21) Application number: 17791867.9
(22) Date of filing: 17.10.2017
(51) Int. Cl.: H04B 3/28, H04B 3/30

(54) **COAXIAL DATA COMMUNICATION WITH REDUCED EMI**
KOAXIALE DATENKOMMUNIKATION MIT VERRINGERTEM EMI
COMMUNICATION DE DONNÉES COAXIALE AVEC EMI RÉDUITE

(30) Priority: 17.10.2016 US 201615295730
(43) Date of publication of application: 21.08.2019
(73) Proprietor: Microchip Technology Incorporated, Chandler, AZ 85224-6199 (US)
(72) Inventor: IVANOV, Galin, 76297 Stutensee (DE); KUIJK, Maarten, 2018 Antwerp (BE)
(74) Representative: sgb europe
(86) International application number: PCT/US2017/056923
(87) International publication number: WO 2018/075482

(56) References cited:
- WO-A1-2015/168586
- US-A1- 2014 328 231
- US-A1- 2017 041 044

## Description

Electronic technologies are pushing the demand for increased data transmission speed (bandwidth) over wired interconnection systems, e.g., coaxial cable. Current problems of using coaxial cable interconnections for data transmissions are for example but not limited to: ground loops causing noise pickup, coaxial cable lengths that are resonant at certain frequencies with subsequent unwanted antenna effects that increase unwanted signal (interference) reception and emission, poor shielding effectiveness to electromagnetic interference (EMI), poor common mode noise rejection, and the inability to use ferrite chokes in wiring harnesses, e.g., for automotive applications. These coaxial cable weaknesses may reduce the reliability of high speed data communications when the signal-to-noise ratio thereof is degraded by the coaxial cable being subjected to electromagnetic interference (EMI).

WO 2015/168586 discloses a coaxial data communication with reduced EMI.

Therefore a need exists for reduced electromagnetic interference (EMI) when communicating through a coaxial cable. This and other objects can be achieved by a transmission circuit and system as defined in the independent claims. Further enhancements are characterized in the dependent claims.
Figure 1 illustrates a schematic diagram of a data communications circuit using coaxial cable and having reduced EMI, according to a specific embodiment of this disclosure;
Figure 2 illustrates a schematic block diagram of a prior technology data communications system using coaxial cable;
Figure 3 illustrates a schematic block diagram of a data communications system using the coaxial cable circuit shown in Figure 1;
Figure 4 illustrates an example graph of the CMRR of a differential receiver at lower frequencies, according to the teachings of this disclosure;
Figure 5 illustrates an example graph of common mode frequency response of a common mode choke at higher frequencies, according to the teachings of this disclosure; and
Figure 6 illustrates a schematic diagram of a first data communications circuit using separate circuit components and coaxial cables for receive and transmit and having reduced EMI, according to another specific embodiment of this disclosure.
Figure 7 illustrates a schematic diagram of a second data communications circuit using separate circuit components and coaxial cables for receive and transmit and having reduced EMI, according to another specific embodiment of this disclosure.

While the present disclosure is susceptible to various modifications and alternative forms, specific example embodiments thereof have been shown in the drawings and are herein described in detail. It should be understood, however, that the description herein of specific example embodiments is not intended to limit the disclosure to the particular forms disclosed herein, but on the contrary, this disclosure is to cover all modifications and equivalents as defined by the appended claims.

There exists a need for increasing data transmission speed (information bandwidth) with reduced electromagnetic interference (EMI) when communicating through a coaxial cable. Current problems of coaxial cable signal interconnections for example are but not limited to: grounding, ground loops, resonances/antenna-effects, shielding effectiveness (immunity and emissions), circuit topology imbalance->EMI, inability to use ferrite chokes in automotive wire-harnesses, *etc.* Generally, there also exists a need during high bit rate communications for reducing electromagnetic radiation emissions as well as providing immunity to external interference when using coaxial cable signal interconnections. Stringent automotive EMI requirements have to be met at low cost while providing high bit rate communications, even for full-duplex communications over a single coaxial cable.

To meet these difficult technical requirements the following must be achieved: 1) reduce outgoing electromagnetic radiation (emission) originating from outgoing (transmitted) data, 2) reduce electromagnetic radiation (emission) originating from digital circuitry on a printed circuit board (PCB) of an electronic device, e.g., noise generated from power/ground planes by device switching, *etc*.; 3) reduce electromagnetic radiation (emission) originating from stimulation of resonances, e.g., resonances that are due to high Q-factor coupling of two or more devices through the connecting coaxial cable; 4) transmitting and receiving both half-duplex and full-duplex over a coaxial cable at high bit rates, 5) achieve high immunity to incidental radiation (called bulk-current injection) as required for automotive applications, and 6) keep component and manufacturing costs low.

According to various embodiments, a minimal required circuit topology for communications using coaxial cable is provided by using a common-mode choke and a dissipative element having impedance, e.g., resistor, inductor, and combinations thereof, resulting in extremely low radiated emissions and high immunity to external radiation interference in a low-cost way.

Referring now to the drawings, the details of specific example embodiments are schematically illustrated. Like elements in the drawings will be represented by like numbers, and similar elements will be represented by like numbers with a different lower case letter suffix.

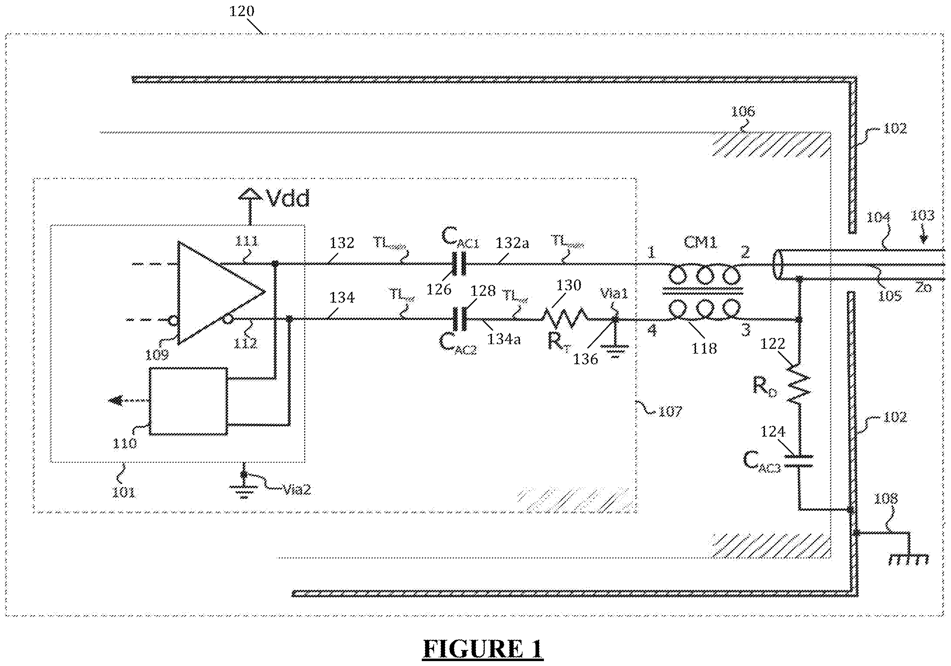

Referring to Figure 1, depicted is a schematic diagram of a data communications circuit using coaxial cable and having reduced EMI, according to a specific embodiment of this disclosure. An exemplary embodiment, according to the teachings of this disclosure, may comprise an integrated circuit (IC) 101 having circuits for performing data communications, e.g., networking functions. The IC 101 may include a differential driver 109 and, optionally, a differential receiver 110. The IC 101 may be arranged on a printed circuit board (PCB) 106 that may be contained inside of a chassis (e.g., enclosure) 102 of a device 120. The device 120 may be used for, but is not limited to, taking and/or recording pictures and/or sound, networking, display (man-machine interface - MMI), sensing, control, *etc.* The PCB 106 may also comprise a digital ground plane 107, a common mode choke 118, and a dissipative element 122.

In order to communicate with other devices, a coaxial cable 103 (*e.g.*, a short coaxial cable) may be connected between the device 120 and another device(s) (not shown). The chassis 102 may not necessarily completely enclose the device 120, *e.g.*, a display having an opening for viewing the display that may be part of the device 120. Chassis 102, preferably, may be made of a conductive material for preventing radiation or reception of EMI. Depending on the use of the device 120, the chassis 102 may have a chassis-ground connection (node) 108 that may be used to connect it to a vehicle's chassis frame (not shown). It is also contemplated and within the scope of this disclosure that the chassis ground 108 may be connected to the digital ground plane 107.

The coaxial cable 103 is intended for data communication, e.g., transmitting and/or receiving data either in simplex, half-duplex or in full duplex mode. In order to transmit signals, the differential driver 109 generates a complementary output signal at its output nodes 111 and 112. Preferably each of the outputs nodes 111 and 112 of the differential driver 109 may be coupled to an appropriate source termination (not shown). Preferably, the output signal on output nodes 111 and 112 are configured as differential (signals are in anti-phase) having substantially no common mode component. In practice however, there will always be a small common mode component present due to a small unbalance in the output driver circuitry, or a non-linearity generating a small level of duty-cycle-distortion. Output node 111 drives a transmission line 132 (TLₘₐᵢₙ) that is coupled from the IC 101 to the common-mode choke 118. The coaxial cable 103 may be closely coupled the common-mode choke 118. Output node 112 drives a transmission line 134 (TLref) also coupled to the common-mode choke 118. AC-coupling may be provided anywhere in one or both of the transmission lines 132 and/or 134. AC-coupling of both transmission lines 132 and 134 are preferable when transmitting DC-balanced signal data. It is contemplated and within the scope of this disclosure that one having ordinary skill in electronic circuit design and the benefit of this disclosure could place one or more DC blocking capacitors (AC coupling capacitors) at different places in the circuits disclosed herein to block DC voltages from appearing with AC signals.

AC signal coupling (DC blocking) may be provided by capacitors 124, 126 and/or 128. The reference transmission line 134 may be further terminated by a series terminating impedance (e.g., resistor) 130 that may be coupled to the digital ground plane 107. The transmission lines 132 and 134 may be referenced to the digital ground plane 107 through grounding node 136 (Via1). The digital ground plane 107 is preferably the ground plane present just below the transmission lines 132 and 134 in which the transmission line's return currents are present. Using the digital ground plane 107 and the transmission lines 132 and 134 together form microstrip transmission lines. Placing a second ground plane (not shown) on the other side of the transmission lines 132 and 134 forms stripline transmission lines. Using either microstrip or stripline transmission lines provides for lower EMI radiation and pickup, and a substantially constant transmission impedance.

The grounding node 136 may be further coupled to one of the inputs of the common-mode choke 118, shown in Figure 1 as connection 4. The transmission line 132a may be coupled to the other input of the common-mode choke 118, shown in Figure 1 as connection 1. Both transmission lines 132 and 134 are preferably constructed as much as possible in a symmetric way, e.g., substantially the same lengths and widths, and referenced to the same digital ground plane 107, *e.g.*, same characteristic impedances, *etc.* At the beginning of both transmission lines 132 and 134, the IC 101 will preferably have a connection to the digital ground plane 107. This digital ground plane 107 connection is also preferable when a differential receiver 110 of the IC 101 is used to receive data signals coming from the coaxial cable 103.

The common-mode choke 118 will allow the differential current arriving at the end of both transmission lines 132 and 134 to pass substantially un-attenuated. For example, when the differential driver 109 transmits at each of its output nodes 111 and 112 single-ended 500 mV signals 180 degrees out of phase and referenced to the digital ground plane 107. A 1000 mV (1 volt) peak-to-peak differential signal will be produced. Whereas only a 500 mV signal will be launched into the coax 103 between its center conductor 105 and shield 104. The other half of this signal voltage will be terminated in the termination impedance (resistor) 130. By making the differential to single-ended signal conversion in this way adjacent to the common-mode choke 118, only very little common mode voltages will be presented to the common-mode choke, since both opposite signal currents are presented to the common-mode choke's inputs. Only the aforementioned non-ideal small component of common-mode signal generation due to duty-cycle distortion may be present at the common-mode choke 118, but that already small signal will be further reduced by the choking behavior of the common-mode choke 118 with respect to the common-mode signals. Also voltage bouncing present on the PCB 106, *e.g.*, caused by transistor switching currents due to digital activity of the IC 101 and/or also other ICs (not shown), will be choked in an effective way by the common-mode choke 118.

At the other side of the common-mode choke 118, output connections 2 and 3 may be coupled to the center conductor 105 and shield 104, respectively, of the coaxial cable 103. The shield 104 may further be coupled to the chassis 102 through the dissipative element 122 that may be, for example but is not limited to, a resistor and/or an inductor (e.g., a ferrite bead). The dissipative element 122 may have a resistive part and an inductance part when looking at the complex impedance. Further, in most cases, it is preferable that there is no DC current between the shield 104 and the chassis 102, for which it is advised to provide a series connected DC blocking device in the path of the dissipative element 122 with an AC-coupling (DC blocking) capacitor 124.

The resistive value of the dissipative element 122 should be chosen with some consideration. There is a trade-off involved. A small value is good for reflecting incident bulk-current injection current that is generated on the shield 104 of the coaxial cable 103 when performing radiation immunity performance testing. A larger resistance value will tend to dissipate the bulk-current injected wave, will cause heating of the dissipative element 122 and will also allow more of the bulk-current to be injected into the device 102 instead of reflecting it. So a smaller value for the dissipative element 122 seems to be ideal, however, another function of the resistance value of the dissipative element 122 is to serve as a dissipating resistance in the otherwise high-Q factor system when two or more devices are coupled together with a coaxial cable 103 therebetween. When having a high Q-factor system, a multitude of resonance frequencies can be stimulated by the smallest input signal, e.g., coming from the PCB 106. Coupling with one of these signals or any of its harmonics originating from signals or radiation anywhere in the device chassis 102 may be enough to generate an unwanted radiated emission peak in the emission spectrum of the system incorporating the device 120. Thus the resistance and/or inductance of the dissipative element 122 when made sufficiently large enough will reduce resonances of this type. In practice a value of a few ohms up to about 100 ohms would work, more specifically good results have been observed for achieving good bulk current injection immunity as reducing radiation emissions with a resistance value in the range of from about 20 ohms to about 45 ohms. Preferably the resistance value may be about 33 ohms.

When the IC 101 is closely coupled to the common-mode choke 118, the transmission lines 132 and 134 can be reduced to very short lengths, and thereby become just electrical nodes of the data transmission circuit. In that case, all the rest of the preferred circuitry remains the same. Still the termination impedance 130 will remain as needed, with its connection to the ground node 136 and the common-mode choke 118 input connection 4. One of the advantages is, however, that the IC 101 doesn't necessarily need to be positioned close to the coax connection. In practical cases the coaxial cable 103 may be connected through a suitable coaxial connector, it is contemplated and within the scope of this disclosure that a person having ordinary skill in the electronic arts and having the benefit of this disclosure may implement such connections in a way that merits various embodiments thereof.

When only transmitting data from device 120 through the coaxial cable 103, the common mode voltage of the signals on nodes 111 and 112 will be quite small, since the two nodes are intended to have been provided as anti-phase signals by the driver 109. When also receiving a data signal from the coax 103, originating from a device at the other end of the coaxial cable 103, this will be seen as a reduced data signal superimposed in the common mode voltage of the signals on nodes 111 and 112. Therefore, receiver 110 can reject the common mode signals on nodes 111 and 112 for the purpose of receiving data originating from the other end of the coaxial cable 103. If IC 101 is intended as a receiver only, then the driver 109 can be reduced to its source terminating resistors (not shown), serving as transmission line terminations of transmission lines 132 and 134. The differential receiver 110 may remain the same in either case.

It is contemplated and within the scope of this disclosure that the differential receiver 110 may share the same circuit components as the driver 109, e.g., common-mode choke 118, dissipative element 122, coaxial cable 103, *etc.*, or the differential receiver 110 circuit components may be independent of the driver 109 circuit components. This allows simultaneous full duplex operation, and/or simultaneous dual simplex operation with appropriately connected drivers, receivers and coaxial cables.

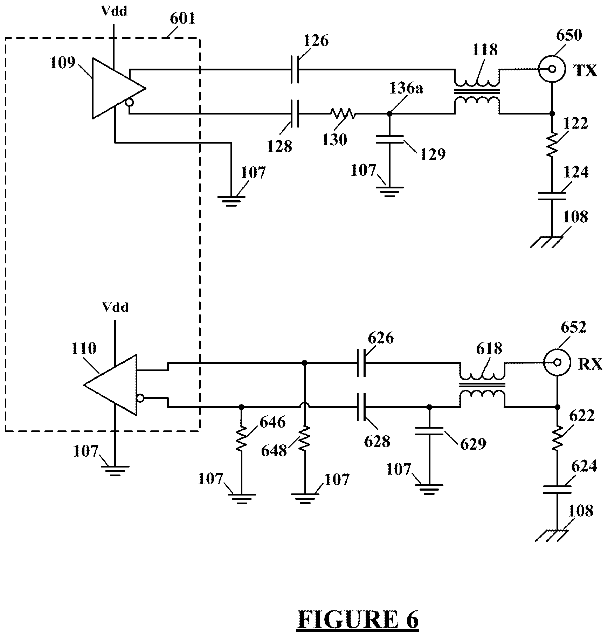

Referring to Figure 6, depicted is a schematic diagram of a data communications circuit using separate circuit components and coaxial cables for receive and transmit and having reduced EMI, according to another specific embodiment of this disclosure. When using a separate coaxial cable, e.g., connected to coaxial connector 652 for receive functions the aforementioned transmit (driver 109) circuit components may be duplicated. A receive common-mode choke 618 may be coupled between the receive coaxial cable (connector 652) and the differential inputs of the differential receiver 110. A receive dissipative element 622 may be coupled between the shield side of the receive coaxial cable and chassis ground 108, and terminating impedances 646 and 648 may be coupled between the differential inputs of the receiver 110 and the digital ground plane 107. Impedance types and values for the receive dissipative element 622 may be selected as described above for the dissipative element 122. The terminating impedances 646 and 648 may be substantially the same impedance value as the receive coaxial cable and/or each of the respective transmission lines coupling the differential receiver 110 inputs to the receive common-mode choke 618. Typical values may be, but are not limited to, about 50 ohms for each of the terminating impedances 646 and 648, and about 33 ohms for the receive dissipative element 622. DC blocking capacitors 624, 626 and 628 may also be added as shown in Figure 6. Capacitor 629 may optionally be used to DC block and radio frequency bypass one of the inputs of the differential receiver 110 as shown in Figure 6. Similarly, capacitor 129 may optionally be used to DC block and radio frequency bypass one node of the isolation choke 118.

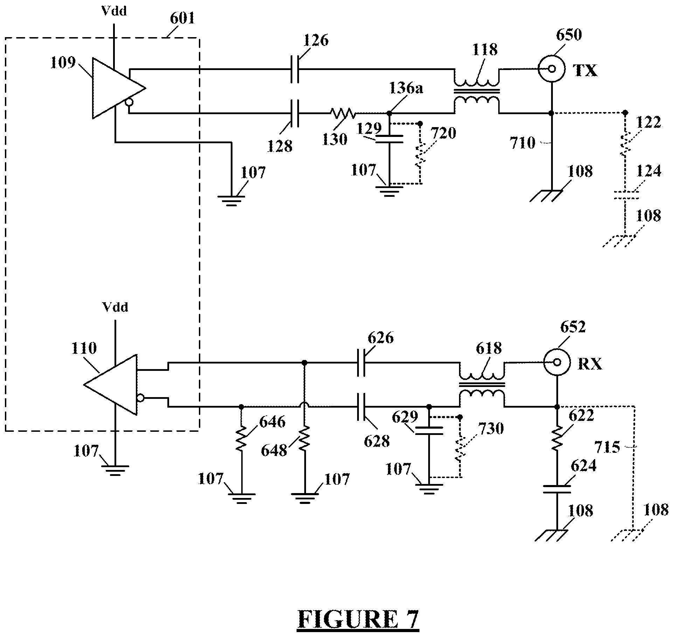

Referring to Figure 7, depicted is a schematic diagram of yet another data communications circuit using separate circuit components and coaxial cables for receive and transmit and associated circuits and having reduced EMI similar to Fig. 6. Again, this embodiment uses separate coaxial cables. However, in one of the TX or the RX circuit, the coaxial shield of the connector may be directly connected to ground not using the dissipative resistor 122/622 of Fig. 6. For example as shown in Fig. 7, according to one embodiment, the shield of connector 650 is directly connected to ground 108 via connection 710 instead of using the dissipative element 122. Otherwise the transmitter is identical to the embodiments of Fig. 1 and 6. When the shield of the transmitter connector 650 is directly connected with ground the receiver circuit remains unchanged with respect to Fig. 6. In other words, the dissipative elements 622 and DC blocking capacitor 624 couple the shield of connector 652 with chassis ground 108. Otherwise the circuits remain the same with respect to Fig. 6.

As shown in Fig. 7, the transmitter 109 and the receiver 110 may be arranged in a single device 601 thereby forming a transceiver. A respective second communication device coupled through the two coaxial cables would then comprise the same arrangement as shown in Fig. 7. Thus, only one side of a coaxial cable would connect the shield directly with chassis ground.

In an alternative embodiment, as indicated by the dotted lines in Fig. 7, the transmitter circuit remains unchanged with respect to Fig. 6 and the shield of connector 652 in the receiver circuit is directly connected with the chassis ground 108 via connection 715.

According to further embodiments, as shown in Fig. 7, optional resistors 720 and 730 in parallel to capacitances 129 and 629 can be introduced, which improves the time response (recovery time) to specific disturbances.

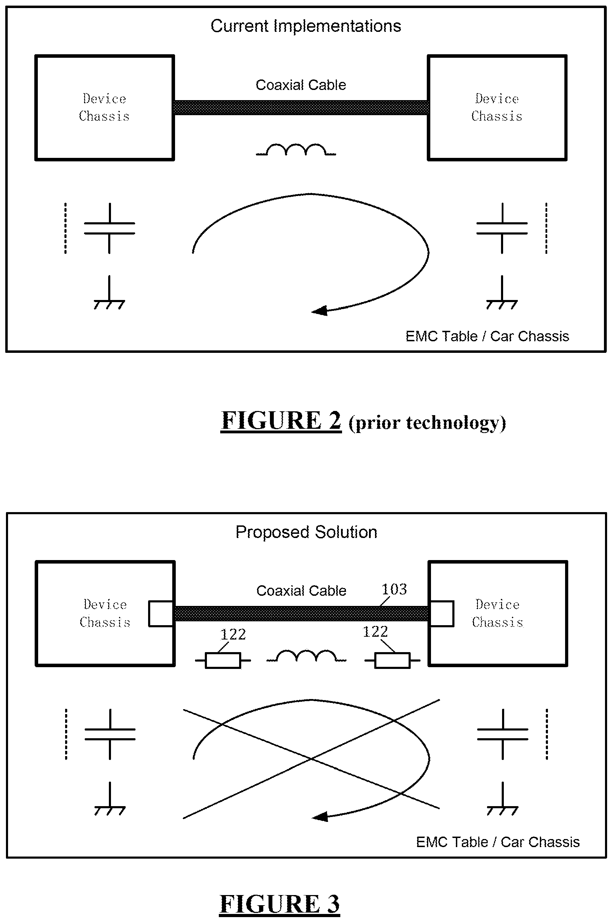

Referring to Figure 2, depicted is a schematic block diagram of a prior technology data communications system using coaxial cable. NRZ coding provides for a simplistic and therefore cost effective solution which however results in a broadband excitation. A very low impedance cable shield/chassis ground connection creates a High Q structure with dipole/loop antenna effects that may amplify disturbances (due to real-life parasitic effects).

Referring to Figure 3, depicted is a schematic block diagram of a data communications system using the coaxial cable circuit shown in Figure 1. A preferred embodiment of this disclosure adds a dissipative element 122 in the signal loop to lower the circuit Q. This lowers the shielding effectiveness of the coaxial cable 103. This is compensated for, according to the teachings of this disclosure, by using a common mode choke 118 in combination with the CMRR of a differential receiver 110 (Figure 1). The common mode choke 118 is one stage of counteracting (compensating for) the reduced shielding effectiveness. The other stage is the CMRR of the differential receiver 110. This is two stage approach where every stage addresses different frequency ranges (CMRR covers the low frequency range noise rejection; the common mode choke covers the high frequency noise rejection). In other words the common mode choke compensates for the declining CMRR effectiveness at higher frequencies of the differential receiver 110.

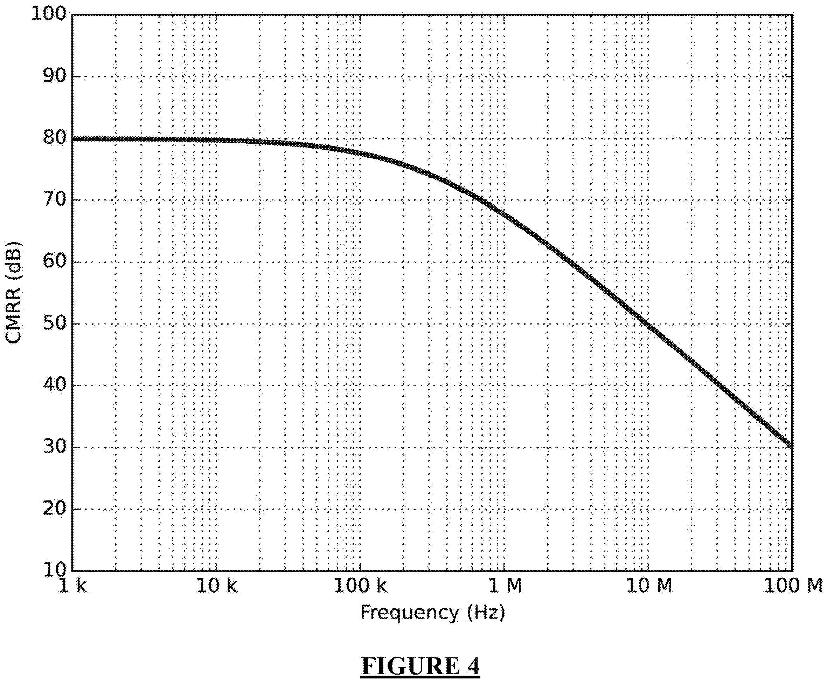

Referring to Figure 4, depicted is an example graph of the CMRR of a differential receiver at lower frequencies, according to the teachings of this disclosure. Differential receivers are able to exhibit high (>80 dB) levels of common-mode rejection to frequencies of several tenths of Hz to several tenths of a MHz. At higher frequencies the level of common-mode rejection declines.

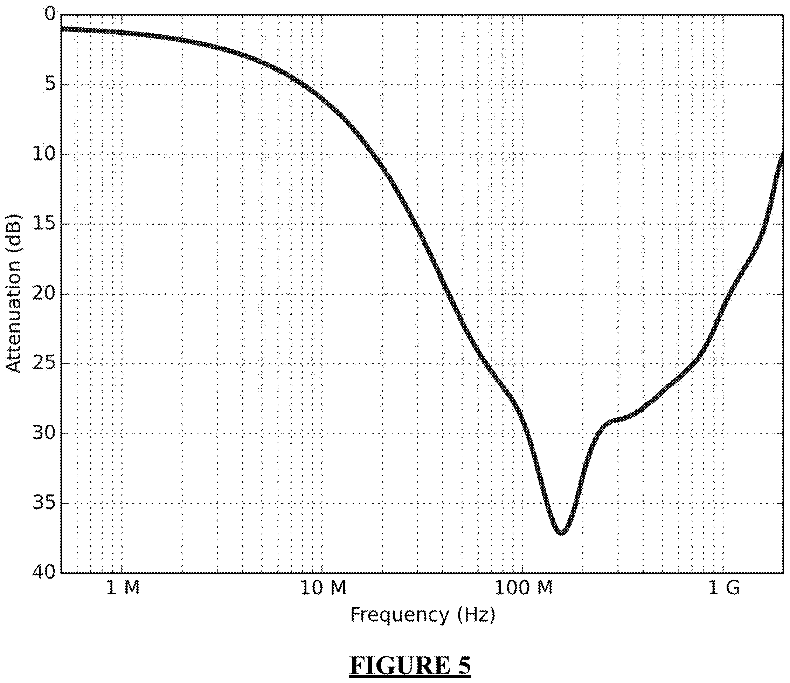

Shown in Figure 5 is an example graph of common mode frequency response of a common mode choke at higher frequencies, according to the teachings of this disclosure. The common-mode rejection of a suitable common-mode choke can exhibit high levels of common-mode rejection (>30 dB) in the frequency range above 100 MHz. Common mode attenuation effect to lower frequencies declines and for much higher frequencies (1 GHz and above) is dominated by parasitic (capacitive) coupling effects.

Therefore this multistage combination of a differential receiver and a common mode choke approach provides substantially the same emission/immunity levels as the un-damped high Q coaxial cable by using to advantage the lower frequency common mode rejection of the differential driver/receiver 109 and the higher frequency common mode rejection of the common mode choke 118.

It is contemplated and within the scope of this disclosure that other embodiments may be configured by one skilled in the art of electronics and having the benefit of this disclosure. It is also contemplated and within the scope of this disclosure that embodiments disclosed herein may be successfully applied to similar circuits that may be configured in any transistor technology, including but not limited to, CMOS BICMOS and SiGe BICMOS. Also embodiments disclosed herein may benefit communications signals when implemented as either differential or single ended configurations.

While embodiments of this disclosure have been depicted, described, and are defined by reference to example embodiments of the disclosure, such references do not imply a limitation on the disclosure, and no such limitation is to be inferred. The depicted and described embodiments of this disclosure are examples only, and are not exhaustive of the scope of the disclosure.

## Claims

1. A transmission circuit using two coaxial cables (650; 652) each having a center conductor and a shield, comprising:
an integrated circuit comprising a differential driver (109) having first and second outputs, and a differential receiver (110) having first and second inputs;
a first common mode choke (118) coupled between the first output of the differential driver (109) and a center conductor of a first coaxial cable (650), and between the second output of the differential driver (109) and the shield of the first coaxial cable (650)
a first terminating impedance (130, 129; 720) coupled between the second output of the first differential driver (109) and a first ground node (107);
a second common mode choke (618) coupled between the first input of the differential receiver (110) and the center conductor of a second coaxial cable (652), and between the second input of the differential receiver (110) and the shield of the second coaxial cable (652);
second terminating impedances (646; 648) coupled between the first and second inputs of the differential receiver (110) and the first ground node (107), respectively; and
a dissipative element (622; 624) coupled between the shield of the second coaxial cable (652) and a second ground node (108),
**characterized in that**
the shield (650) of the first coaxial cable (650) is directly connected with the second ground node(108) without using a dissipative resistor.

2. A transmission circuit using two coaxial cables (650; 652) each having a center conductor and a shield, comprising:
an integrated circuit comprising a differential driver (109) having first and second outputs, and a differential receiver (110) having first and second inputs;
a first common mode choke (118) coupled between the first output of the differential driver (109) and a center conductor of a first coaxial cable (650), and between the second output of the differential driver (109) and the shield of one of the first coaxial cable (650);
a first terminating impedance (130, 129; 720) coupled between the second output of the first differential driver (109) and a first ground node (107);
a dissipative element (122, 124) coupled between the shield of the first coaxial cable (650) and a second ground node (108);
a second common mode choke (618) coupled between the first input of the differential receiver (110) and the center conductor of a second coaxial cable (652), and between the second input of the differential receiver (110) and the shield of the second coaxial cable (652), and
second terminating impedances (646, 648) coupled between the first and second inputs of the differential receiver (110) and the first ground node (107), respectively;
**characterized in that**
the shield of the second coaxial cable (652) is directly connected with the second ground node (108) without using a dissipative resistor.

3. The transmission circuit according to claim 1 or 2, wherein the first terminating impedance comprises a first resistor (130) and a first capacitance (129) coupled in series, wherein a node (136a) between the first resistor (130) and the first capacitance (129) is coupled with the first common mode choke (118).

4. The transmission circuit according to claim 3, further comprising a second resistor (720) coupled in parallel with the first capacitance (129).

5. The transmission circuit according to claim 3 or claim 4, further comprising first and second DC-blocking capacitors (126; 128) coupled between the first and second outputs of the differential driver (109) and the first common mode choke (118), and
third and fourth DC-blocking capacitors (626; 628) coupled between the first and second inputs of the differential receiver (110) and the second common mode choke (618).

6. The transmission circuit according to claim 5, further comprising a second capacitance (629) coupled between the first ground node (107) and a node between the fourth DC-blocking capacitor (628) and the second common mode choke (618).

7. The transmission circuit according to claim 6, further comprising a third resistor (730) coupled in parallel with the second capacitance (629).

8. The transmission circuit according to one of claims 1-7, wherein the first ground node (107) is connected to a digital ground plane and/or wherein the second ground node (108) is connected to a chassis ground and/or wherein the first and the second ground nodes (107; 108) are coupled together.

9. A system for transferring information over a coaxial cable (650) having a center conductor and a shield, said system comprising:
a data transmission device comprising:
a first integrated circuit comprising a differential driver (109) having first and second outputs,
a first common mode choke (118) coupled between the first output of the differential driver (109) and the center conductor, and between a first ground node (107) and the shield of one end of the coaxial cable (650), respectively;
a first terminating impedance (130), 129; 720) coupled between the second output of the differential driver (109) and the first ground node (107);
wherein the shield of the one end of the coaxial cable (650) is directly connected with a second ground node (108) without using a dissipative resistor; and
a data reception device comprising:
a second integrated circuit comprising a differential receiver (110) having first and second inputs,
a second common mode choke (618) coupled between the first and second inputs of the differential receiver (110)and the center conductor and the shield of another end of the coaxial cable (650), respectively;
second terminating impedances (646; 648) coupled between each differential input of the differential receiver (110) and a third ground node (107), and
a dissipative element (622; 624) coupled between the shield of the another end of the coaxial cable (650) and a fourth ground node (108).

10. A system for transferring information over a coaxial cable (650) having a center conductor and a shield, said system comprising:
a data transmission device comprising:
a first integrated circuit comprising a differential driver (109) having first and second outputs,
a first common mode choke (118) coupled between the first output of the differential driver (109) and the center conductor, and between a second ground node (107) and the shield of one end of the coaxial cable (650), respectively;
a first terminating impedance (130, 129; 720) coupled between the second output of the differential driver (109) and the second ground node (107);
a dissipative element coupled between the shield of the one end of the coaxial cable and a second ground node; and
a data reception device comprising:
a second integrated circuit comprising a differential receiver having first and second inputs,
a second common mode choke coupled between the first and second inputs of the differential receiver and the center conductor and the shield of another end of the coaxial cable, respectively;
second terminating impedances coupled between each differential input of the differential receiver and a third ground node, and
wherein the shield of the another end of the coaxial cable is directly coupled with a fourth ground node without using a dissipative resistor.

11. The system according to claim 9 or 10, further comprising a radio frequency bypass capacitor (629) coupled between the third ground node (107) and the differential input of the differential receiver (110) not coupled to the center conductor of the coaxial cable (650) through the second common mode choke (618).

12. The system according to one of the preceding claims 9-11, further comprising:
a first printed circuit board (106) having a first ground plane thereon, wherein the first integrated circuit is mounted on the first printed circuit board (106); and
a second printed circuit (106) board having a second ground plane thereon, wherein the second integrated circuit is mounted on the second printed circuit board (106).

13. The system according to claim 12, further comprising:
first and second transmission lines (132; 134) on the first printed circuit board (106) and coupled between the first and second outputs, respectively, of the differential driver (109) and the first common mode choke (118); and
third and fourth transmission lines (132; 134) on the second printed circuit board (106) and coupled between the first and second inputs, respectively, of the differential receiver (110) and the second common mode choke (618).

14. The system according to one of claims 11 - 14, wherein the dissipative element comprises a dissipative resistor (622) and preferably a DC-blocking capacitors (624) coupled in series with the dissipative resistor (622) and the fourth ground node (108).

15. The system according to one of claims 9 - 14, further comprising:
third and fourth DC-blocking capacitors (126; 128) coupled between the first and second outputs of the differential driver (109) and the first common mode choke (118); and
fifth and sixth DC-blocking capacitors (626; 628) coupled between the first and second inputs of the differential receiver (110) and the second common mode choke (618).

## Patentansprüche

1. Übertragungsschaltung, die zwei Koaxialkabel (650; 652) verwendet, die jeweils einen Mittelleiter und eine Abschirmung aufweisen, wobei die Übertragungsschaltung aufweist:
eine integrierte Schaltung, die einen Differentialtreiber (109) aufweist, der erste und zweite Ausgänge aufweist, und einen Differentialempfänger (110) aufweist, der erste und zweite Eingänge aufweist;
eine erste Gleichtaktdrossel (118), die zwischen den ersten Ausgang des Differentialtreibers (109) und einen Mittelleiter eines ersten Koaxialkabels (650) und zwischen den zweiten Ausgang des Differentialtreibers (109) und die Abschirmung des ersten Koaxialkabels (650) gekoppelt ist;
eine erste Abschlussimpedanz (130, 129; 720), die zwischen den zweiten Ausgang des ersten Differentialtreibers (109) und einen ersten Masseknoten (107) gekoppelt ist;
eine zweite Gleichtaktdrossel (618), die zwischen den ersten Eingang des Differentialempfängers (110) und den Mittelleiter eines zweiten Koaxialkabels (652) und zwischen den zweiten Eingang des Differentialempfängers (110) und die Abschirmung des zweiten Koaxialkabels (652) gekoppelt ist;
zweite Abschlussimpedanzen (646; 648), die zwischen die ersten und zweiten Eingänge des Differentialempfängers (110) bzw. den ersten Masseknoten (107) gekoppelt sind; und
ein dissipatives Element (622; 624), das zwischen die Abschirmung des zweiten Koaxialkabels (652) und einen zweiten Masseknoten (108) gekoppelt ist,
**dadurch gekennzeichnet, dass**
die Abschirmung (650) des ersten Koaxialkabels (650) direkt mit dem zweiten Masseknoten (108) verbunden ist, ohne einen dissipativen Widerstand zu verwenden.

2. Übertragungsschaltung, die zwei Koaxialkabel (650; 652) verwendet, die jeweils einen Mittelleiter und eine Abschirmung aufweisen, wobei die Übertragungsschaltung aufweist:
eine integrierte Schaltung, die einen Differentialtreiber (109) aufweist, der erste und zweite Ausgänge aufweist, und einen Differentialempfänger (110) aufweist, der erste und zweite Eingänge aufweist;
eine erste Gleichtaktdrossel (118), die zwischen den ersten Ausgang des Differentialtreibers (109) und einen Mittelleiter eines ersten Koaxialkabels (650) und zwischen den zweiten Ausgang des Differentialtreibers (109) und die Abschirmung eines der ersten Koaxialkabel (650) gekoppelt ist;
eine erste Abschlussimpedanz (130, 129; 720), die zwischen den zweiten Ausgang des ersten Differentialtreibers (109) und einen ersten Masseknoten (107) gekoppelt ist;
ein dissipatives Element (122, 124), das zwischen die Abschirmung des ersten Koaxialkabels (650) und einen zweiten Masseknoten (108) gekoppelt ist;
eine zweite Gleichtaktdrossel (618), die zwischen den ersten Eingang des Differentialempfängers (110) und den Mittelleiter eines zweiten Koaxialkabels (652) und zwischen den zweiten Eingang des Differentialempfängers (110) und die Abschirmung des zweiten Koaxialkabels (652) gekoppelt ist, und
zweite Abschlussimpedanzen (646, 648), die zwischen den ersten bzw. zweiten Eingängen des Differentialempfängers (110) und den ersten Masseknoten (107) gekoppelt sind;
**dadurch gekennzeichnet, dass**
die Abschirmung des zweiten Koaxialkabels (652) direkt mit dem zweiten Masseknoten (108) verbunden ist, ohne dass ein dissipativer Widerstand verwendet wird.

3. Übertragungsschaltung gemäß Anspruch 1 oder 2, wobei die erste Abschlussimpedanz einen ersten Widerstand (130) und eine erste Kapazität (129) aufweist, die in Reihe gekoppelt sind, wobei ein Knoten (136a) zwischen dem ersten Widerstand (130) und der ersten Kapazität (129) mit der ersten Gleichtaktdrossel (118) gekoppelt ist.

4. Übertragungsschaltung gemäß Anspruch 3, die weiterhin einen zweiten Widerstand (720) aufweist, der parallel zur ersten Kapazität (129) gekoppelt ist.

5. Übertragungsschaltung gemäß Anspruch 3 oder Anspruch 4, die weiterhin erste und zweite Gleichstromsperrkondensatoren (126; 128) aufweist, die zwischen den ersten und zweiten Ausgängen des Differentialtreibers (109) und die erste Gleichtaktdrossel (118) gekoppelt sind, und
dritte und vierte Gleichstromsperrkondensatoren (626; 628) aufweist, die zwischen die ersten und zweiten Eingänge des Differentialempfängers (110) und die zweite Gleichtaktdrossel (618) gekoppelt sind.

6. Übertragungsschaltung gemäß Anspruch 5, die weiterhin eine zweite Kapazität (629) aufweist, die zwischen den ersten Masseknoten (107) und einen Knoten zwischen dem vierten Gleichstromsperrkondensator (628) und der zweiten Gleichtaktdrossel (618) gekoppelt ist.

7. Übertragungsschaltung gemäß Anspruch 6, die weiterhin einen dritten Widerstand (730) aufweist, der parallel zur zweiten Kapazität (629) gekoppelt ist.

8. Übertragungsschaltung gemäß einem der Ansprüche 1 bis 7, wobei der erste Masseknoten (107) mit einer digitalen Massefläche verbunden ist und/oder wobei der zweite Masseknoten (108) mit einer Gehäusemasse verbunden ist und/oder wobei die ersten und zweiten Masseknoten (107; 108) miteinander gekoppelt sind.

9. System zum Übertragen von Informationen über ein Koaxialkabel (650), das einen Mittelleiter und eine Abschirmung aufweist, wobei das System aufweist:
eine Datenübertragungsvorrichtung, die aufweist:
eine erste integrierte Schaltung, die einen Differentialtreiber (109) aufweist, der erste und zweite Ausgänge aufweist,
eine erste Gleichtaktdrossel (118), die zwischen den ersten Ausgang des Differentialtreibers (109) und den Mittelleiter bzw. zwischen einen ersten Masseknoten (107) und die Abschirmung eines Endes des Koaxialkabels (650) gekoppelt ist;
eine erste Abschlussimpedanz (130), 129; 720), die zwischen den zweiten Ausgang des Differentialtreibers (109) und den ersten Masseknoten (107) gekoppelt ist;
wobei die Abschirmung des einen Endes des Koaxialkabels (650) direkt mit einem zweiten Masseknoten (108) verbunden ist, ohne dass ein dissipativer Widerstand verwendet wird; und
eine Datenempfangsvorrichtung, die aufweist:
eine zweite integrierte Schaltung, die einen Differentialempfänger (110) aufweist, der erste und zweite Eingänge aufweist,
eine zweite Gleichtaktdrossel (618), die zwischen die ersten und zweiten Eingänge des Differentialempfängers (110) und den Mittelleiter bzw. die Abschirmung eines anderen Endes des Koaxialkabels (650) gekoppelt ist;
zweite Abschlussimpedanzen (646; 648), die zwischen jedem Differentialeingang des Differentialempfängers (110) und einen dritten Masseknoten (107) gekoppelt sind, und
ein dissipatives Element (622; 624), das zwischen der Abschirmung des anderen Endes des Koaxialkabels (650) und einen vierten Masseknoten (108) gekoppelt ist.

10. System zum Übertragen von Informationen über ein Koaxialkabel (650), das einen Mittelleiter und eine Abschirmung aufweist, wobei das System aufweist:
eine Datenübertragungsvorrichtung, die aufweist:
eine erste integrierte Schaltung, die einen Differentialtreiber (109) aufweist, der erste und zweite Ausgänge aufweist,
eine erste Gleichtaktdrossel (118), die zwischen den ersten Ausgang des Differentialtreibers (109) und den Mittelleiter bzw. zwischen einen zweiten Masseknoten (107) und die Abschirmung eines Endes des Koaxialkabels (650) gekoppelt ist;
eine erste Abschlussimpedanz (130, 129; 720), die zwischen den zweiten Ausgang des Differentialtreibers (109) und den zweiten Masseknoten (107) gekoppelt ist;
ein dissipatives Element, das zwischen die Abschirmung des einen Endes des Koaxialkabels und einen zweiten Masseknoten gekoppelt ist; und
eine Datenempfangsvorrichtung, die aufweist:
eine zweite integrierte Schaltung, die einen Differentialempfänger aufweist, der erste und zweite Eingänge aufweist,
eine zweite Gleichtaktdrossel, die zwischen die ersten und zweiten Eingänge des Differentialempfängers und den Mittelleiter bzw. die Abschirmung des anderen Endes des Koaxialkabels gekoppelt ist;
zweite Abschlussimpedanzen, die zwischen jeden Differentialeingang des Differentialempfängers und einen dritten Masseknotenpunkt gekoppelt sind, und
wobei die Abschirmung des anderen Endes des Koaxialkabels direkt mit einem vierten Masseknoten gekoppelt ist, ohne einen dissipativen Widerstand zu verwenden.

11. System gemäß Anspruch 9 oder 10, das weiterhin einen Hochfrequenz-Bypass-Kondensator (629) aufweist, der zwischen den dritten Masseknoten (107) und den Differentialeingang des Differentialempfängers (110) gekoppelt ist, der nicht über die zweite Gleichtaktdrossel (618) mit dem Mittelleiter des Koaxialkabels (650) gekoppelt ist.

12. System gemäß einem der vorhergehenden Ansprüche 9 bis 11, das weiterhin aufweist:
eine erste gedruckte Leiterplatte (106), die eine erste Massefläche darauf aufweist, wobei die erste integrierte Schaltung auf der ersten gedruckten Leiterplatte (106) montiert ist; und
eine zweite gedruckte Leiterplatte (106), die eine zweite Massefläche darauf aufweist, wobei die zweite integrierte Schaltung auf der zweiten gedruckten Leiterplatte (106) montiert ist.

13. System gemäß Anspruch 12, das weiterhin aufweist:
erste und zweite Übertragungsleitungen (132; 134) auf der ersten gedruckten Leiterplatte (106), gekoppelt zwischen den ersten bzw. zweiten Ausgängen des Differentialtreibers (109) und der ersten Gleichtaktdrossel (118); und
dritte und vierte Übertragungsleitungen (132; 134) auf der zweiten gedruckten Leiterplatte (106), gekoppelt zwischen den ersten bzw. zweiten Eingängen des Differentialempfängers (110) und der zweiten Gleichtaktdrossel (618).

14. System gemäß einem der Ansprüche 11 bis 14, wobei das dissipative Element einen dissipativen Widerstand (622) und vorzugsweise einen Gleichstromsperrkondensator (624) aufweist, der in Reihe mit dem dissipativen Widerstand (622) und dem vierten Masseknoten (108) gekoppelt ist.

15. System gemäß einem der Ansprüche 9 bis 14, das weiterhin aufweist:
dritte und vierte Gleichstromsperrkondensatoren (126; 128), die zwischen den ersten und zweiten Ausgängen des Differentialtreibers (109) und die erste Gleichtaktdrossel (118) gekoppelt sind; und
fünfte und sechste Gleichstromsperrkondensator (626; 628), die zwischen die ersten und zweiten Eingänge des Differentialempfängers (110) und die zweite Gleichtaktdrossel (618) gekoppelt sind.

## Revendications

1. Circuit de transmission utilisant deux câbles coaxiaux (650 ; 652) ayant chacun un conducteur central et un blindage, comprenant :
un circuit intégré comprenant un circuit d'attaque différentiel (109) ayant des première et seconde sorties, et un récepteur différentiel (110) ayant des première et seconde entrées ;
un premier arrêt en mode commun (118) couplé entre la première sortie du circuit d'attaque différentiel (109) et un conducteur central d'un premier câble coaxial (650), et entre la seconde sortie du circuit d'attaque différentiel (109) et le blindage du premier câble coaxial (650)
une première impédance de terminaison (130, 129 ; 720) couplée entre la seconde sortie du premier circuit d'attaque différentiel (109) et un premier noeud de masse (107) ;
un second arrêt en mode commun (618) couplé entre la première entrée du récepteur différentiel (110) et le conducteur central d'un second câble coaxial (652), et entre la seconde entrée du récepteur différentiel (110) et le blindage du second câble coaxial (652) ;
de secondes impédances de terminaison (646 ; 648) couplées entre les première et seconde entrées du récepteur différentiel (110) et le premier noeud de masse (107), respectivement ; et
un élément dissipatif (622 ; 624) couplé entre le blindage du second câble coaxial (652) et un second noeud de masse (108),
**caractérisé en ce que**
le blindage (650) du premier câble coaxial (650) est directement connecté au second noeud de masse (108) sans utiliser de résistance dissipative.

2. Circuit de transmission utilisant deux câbles coaxiaux (650 ; 652) ayant chacun un conducteur central et un blindage, comprenant :
un circuit intégré comprenant un circuit d'attaque différentiel (109) ayant des première et seconde sorties, et un récepteur différentiel (110) ayant des première et seconde entrées ;
un premier arrêt en mode commun (118) couplé entre la première sortie du circuit d'attaque différentiel (109) et un conducteur central d'un premier câble coaxial (650), et entre la seconde sortie du circuit d'attaque différentiel (109) et le blindage du premier câble coaxial (650) ;
une première impédance de terminaison (130, 129 ; 720) couplée entre la seconde sortie du premier circuit d'attaque différentiel (109) et un premier noeud de masse (107) ;
un élément dissipatif (122, 124) couplé entre le blindage du premier câble coaxial (650) et un second noeud de masse (108) ;
un second arrêt en mode commun (618) couplé entre la première entrée du récepteur différentiel (110) et le conducteur central d'un second câble coaxial (652), et entre la seconde entrée du récepteur différentiel (110) et le blindage du second câble coaxial (652), et
de secondes impédances de terminaison (646, 648) couplées entre les première et seconde entrées du récepteur différentiel (110) et le premier noeud de masse (107), respectivement ;
**caractérisé en ce que**
le blindage du second câble coaxial (652) est directement connecté au second noeud de masse (108) sans utiliser de résistance dissipative.

3. Circuit de transmission selon la revendication 1 ou 2, dans lequel la première impédance de terminaison comprend une première résistance (130) et une première capacité (129) couplées en série, dans lequel un noeud (136a) entre la première résistance (130) et la première capacité (129) est couplé au premier arrêt en mode commun (118).

4. Circuit de transmission selon la revendication 3, comprenant en outre une seconde résistance (720) couplée en parallèle à la première capacité (129).

5. Circuit de transmission selon la revendication 3 ou la revendication 4, comprenant en outre de premier et second condensateurs de blocage du courant continu (126 ; 128) couplés entre les première et seconde sorties du circuit d'attaque différentiel (109) et le premier arrêt en mode commun (118), et
de troisième et quatrième condensateurs de blocage de courant continu (626 ; 628) couplés entre les première et seconde entrées du récepteur différentiel (110) et le second arrêt en mode commun (618).

6. Circuit de transmission selon la revendication 5, comprenant en outre une seconde capacité (629) couplée entre le premier noeud de masse (107) et un noeud entre le quatrième condensateur de blocage de courant continu (628) et le second arrêt en mode commun (618).

7. Circuit de transmission selon la revendication 6, comprenant en outre une troisième résistance (730) couplée en parallèle avec la seconde capacité (629).

8. Circuit de transmission selon l'une des revendications 1 à 7, dans lequel le premier noeud de masse (107) est connecté à un plan de masse numérique et/ou dans lequel le second noeud de masse (108) est connecté à une masse de châssis et/ou dans lequel les premier et second noeuds de masse (107 ; 108) sont couplés ensemble.

9. Système pour transférer des informations sur un câble coaxial (650) ayant un conducteur
central et un blindage, ledit système comprenant :
un dispositif de transmission de données comprenant :
un premier circuit intégré comprenant un circuit d'attaque différentiel (109) ayant de première et seconde sorties,
un premier arrêt en mode commun (118) couplé entre la première sortie de circuit d'attaque différentiel (109) et le conducteur central, et entre un premier noeud de masse (107) et le blindage d'une extrémité du câble coaxial (650), respectivement ;
une première impédance de terminaison (130, 129 ; 720) couplée entre la seconde sortie du circuit d'attaque différentiel (109) et le premier noeud de masse (107) ;
dans lequel le blindage de l'une des extrémités du câble coaxial (650) est directement connecté à un second noeud de masse (108) sans utiliser de résistance dissipative ; et
un dispositif de réception de données comprenant :
un second circuit intégré comprenant un récepteur différentiel (110) ayant de première et seconde entrées,
un second arrêt en mode commun (618) couplé entre les première et seconde entrées du récepteur différentiel (110) et le conducteur central et le blindage d'une autre extrémité du câble coaxial (650), respectivement ;
de secondes impédances de terminaison (646 ; 648) couplées entre chaque entrée différentielle du récepteur différentiel (110) et un troisième noeud de masse (107), et
un élément dissipateur (622 ; 624) couplé entre le blindage de l'autre extrémité du câble coaxial (650) et un quatrième noeud de masse (108).

10. Système pour transférer des informations sur un câble coaxial (650) ayant un conducteur central et un blindage, ledit système comprenant :
un dispositif de transmission de données comprenant :
un premier circuit intégré comprenant un circuit d'attaque différentiel (109) ayant de première et seconde sorties,
un premier arrêt en mode commun (118) couplé entre la première sortie du circuit d'attaque différentiel (109) et le conducteur central, et entre un deuxième noeud de masse (107) et le blindage d'une extrémité du câble coaxial (650), respectivement ;
une première impédance de terminaison (130, 129 ; 720) couplée entre la seconde sortie du circuit d'attaque différentiel (109) et le deuxième noeud de masse (107) ;
un élément dissipateur couplé entre le blindage de l'une des extrémités du câble coaxial et un deuxième noeud de masse ; et un dispositif de réception de données comprenant :
un second circuit intégré comprenant un récepteur différentiel ayant de première et seconde entrées,
un second arrêt en mode commun couplé entre les première et seconde entrées du récepteur différentiel et le conducteur central et le blindage d'une autre extrémité du câble coaxial, respectivement ;
de secondes impédances de terminaison couplées entre chaque entrée différentielle du récepteur différentiel et un troisième noeud de masse, et
dans lequel le blindage de l'autre extrémité du câble coaxial est directement couplé à un quatrième noeud de masse sans utiliser de résistance dissipative.

11. Système selon la revendication 9 ou 10, comprenant en outre un condensateur de dérivation de radiofréquence (629) couplé entre le troisième noeud de masse (107) et l'entrée différentielle du récepteur différentiel (110) non couplé au conducteur central du câble coaxial (650) par l'intermédiaire du second arrêt en mode commun (618).

12. Système selon l'une des revendications 9 à 11 précédentes, comprenant en outre :
une première carte de circuit imprimé (106) ayant un premier plan de masse sur celle-ci, dans lequel le premier circuit intégré est monté sur la première carte de circuit imprimé (106) ; et
une seconde carte de circuit imprimé (106) ayant un second plan de masse sur celle-ci, dans lequel le second circuit intégré est monté sur la seconde carte de circuit imprimé (106).

13. Système selon la revendication 12, comprenant en outre :
de première et seconde lignes de transmission (132 ; 134) sur la première carte de circuit imprimé (106) et couplées entre les première et seconde sorties, respectivement, du circuit d'attaque différentiel (109) et le premier arrêt en mode commun (118) ; et
de troisième et quatrième lignes de transmission (132 ; 134) sur la seconde carte de circuit imprimé (106) et couplées entre les première et seconde entrées, respectivement, du récepteur différentiel (110) et le second arrêt en mode commun (618).

14. Système selon l'une des revendications 11 à 14, dans lequel l'élément dissipatif comprend une résistance dissipative (622) et de préférence un condensateur de blocage du courant continu (624) couplé en série à la résistance dissipative (622) et au quatrième noeud de masse (108).

15. Système selon l'une des revendications 9 à 14, comprenant en outre :
de troisième et quatrième condensateurs de blocage du courant continu (126 ; 128) couplés entre les première et seconde sorties du circuit d'attaque différentiel (109) et le premier arrêt en mode commun (118) ; et
de cinquième et sixième condensateurs de blocage de courant continu (626 ; 628) couplés entre les première et seconde entrées du récepteur différentiel (110) et le second arrêt en mode commun (618).
